# EUROPÄISCHE PATENTANMELDUNG

(11) **EP 1 353 140 A2**
(43) Veröffentlichungstag der Anmeldung: **15.10.2003**
(21) Anmeldenummer: 03002457.4
(22) Anmeldetag: 05.02.2003
(51) Int. Cl.: G01B 7/30, G01D 5/14, G01D 5/16

(54) **Winkelmesssensor**

(30) Priorität: 12.04.2002 DE 10217027
(71) Anmelder: Valeo Schalter und Sensoren GmbH, 74321 Bietigheim-Bissingen (DE)
(72) Erfinder: Rachui, Dirk, 74321 Bietigheim-Bissingen (DE); Fröhlich, Ekkehart, 74226 Nordheim (DE); Jerems, Frank, 74343 Sachsenheim (DE)
(74) Vertreter: Dreiss, Fuhlendorf, Steimle & Becker

(57) **Zusammenfassung**

Die Erfindung betrifft einen Winkelmesssensor mit einem wenigstens zwei Magnete umfassenden, um eine Achse drehbar angeordneten Magnetsystem und mit einem zwischen den Magneten angeordneten, der Drehbewegung der Magnete nicht folgenden Sensorelement.

Die Erfindung kennzeichnet sich dadurch, dass die Magnete derart angeordnet sind und/oder dass die einander zugewandten Polflächen der Magnete derart ausgebildet sind, dass das Magnetfeld bzw. die magnetische Flussdichte zwischen den Magneten in einem großen Bereich homogen ist.

## Beschreibung

Die Erfindung betrifft einen Winkelmesssensor mit einem wenigstens zwei Magnete umfassenden, um eine Achse drehbar angeordneten Magnetsystem und mit einem zwischen den Magneten angeordneten, der Drehbewegung der Magnete nicht folgendem Sensorelement. Bei derartigen Winkelmesssensoren folgt das Magnetsystem beispielsweise einer Welle, deren Drehwinkel zu bestimmen ist. Bei Bewegen der Welle erfolgt eine Drehbewegung der Magnete um das gehäuseseitig fest angeordnete Sensorelement. Bei bekannten Winkelmesssensoren sind die einander zugewandten Polflächen eben ausgebildet und verlaufen parallel zueinander. Als Sensorelement findet insbesondere ein Magnetfeldsensor, und vorzugsweise ein Hall-IC, Verwendung. Aufgrund der Drehbewegung der Magnete ändert sich die Richtung des Magnetfelds gegenüber dem Sensorelement. Das Sensorelement erfasst das sich ändernde Magnetfeld, woraus auf den Drehwinkel geschlossen werden kann.

Es hat sich gezeigt, dass bei nicht genau zwischen den Magneten positioniertem Sensorelement falsche Messergebnisse erzielt wurden. Ferner wurde festgestellt, dass bei nicht exaktem Rundlauf der Magnete um die Drehachse falsche Messergebnisse erzielt wurden.

Der vorliegenden Erfindung liegt deshalb die Aufgabe zugrunde, einen Winkelmesssensor der eingangs beschriebenen Art derart weiterzubilden, dass exaktere Messergebnisse erzielt werden.

Diese Aufgabe wird bei einem Winkelmesssensor gelöst, der sich dadurch kennzeichnet, dass die Magnete derart angeordnet sind und/oder dass die einander zugewandten Polflächen der Magnete derart ausgebildet sind, dass das Magnetfeld bzw. die magnetische Flussdichte zwischen den Magneten in einem großen Bereich homogen ist.

Dies hat Vorteil, dass bei nicht exakt zwischen den Magneten positioniertem Sensorelement trotzdem ein genaues Messergebnis erzielbar ist. Bei den bekannten Magnetsystemen hat sich nämlich gezeigt, dass die Flussdichte zwischen den Magneten je nach Lage des Sensorelements zwischen den Magneten verschieden ist. Befindet sich folglich das Sensorelement nicht in der vorgesehenen Sollposition, sondern aufgrund von beispielsweise Fertigungstoleranzen, Ungenauigkeiten oder auch von auf die Achse bzw. das Magnetsystem wirkenden äußeren Kräften außerhalb der Sollposition, so ergibt sich ein ungenaues Messergebnis. Erfindungsgemäß ist vorgesehen, dass das Magnetfeld bzw. die magnetische Flussdichte in einem größeren Bereich zwischen den Magneten weitgehend konstant ist, so dass das Messergebnis unabhängig davon ist, ob das Sensorelement exakt zwischen den Magneten oder etwas näher an dem einen bzw. an dem anderen Magneten angeordnet ist.

Ein homogenes Magnetfeld zwischen den einander zugewandten Polflächen der Magnete kann beispielsweise dadurch realisiert werden, dass die einander zugewandten Polflächen uneben sind. Die Unebenheiten sind hierbei so auszuführen, dass die magnetische Flussdichte bzw. das Magnetfeld zwischen den Magneten möglichst homogen ist.

Ferner ist denkbar, dass die einander zugewandten Polflächen der Magnete jeweils eine Aushöhlung, insbesondere eine kalottenartige Aushöhlung, aufweisen. Hierdurch kann ein über einen großen Bereich gleichmäßiges Magnetfeld zwischen den Magneten erzielt werden.

Ferner ist denkbar, dass die einander zugewandten Polflächen der Magnete jeweils eine Bohrung, insbesondere eine Sack- oder Durchgangsbohrung, zur Erhöhung der Homogenität des Magnetfelds aufweisen.

Auch denkbar ist, dass die einander zugewandten Polflächen der Magnete kegel- oder stumpfkegelartige Vertiefungen aufweisen.

Eine vorteilhafte Ausführungsform der Erfindung ergibt sich dann, wenn die einander zugewandten Polflächen der Magnete reliefartig geformte Oberflächen, insbesondere reliefartig ausgebildete Kanten, aufweisen.

Zur Erhöhung der Homogenität des Magnetfelds ist ferner denkbar, dass die Polflächen der Magnete freiformartig ausgebildet sind.

Die Magnete können vorteilhafterweise einen rechteckigen, mehreckigen, insbesondere achteckigen, oder runden Querschnitt aufweisen. Die Magnetisierung erfolgt vorteilhafterweise entlang der Längsachse der Magnete.

Eine vorteilhafte Ausführungsform der Erfindung ergibt sich dann, wenn die einander zugewandten Polflächen der Magnete aus weichmagnetischem Material sind oder wenn die auf dem, einander zugewandten Polflächen der Magnete zusätzliche Polschuhe aus weichmagnetischem Material angebracht sind. Die Oberflächen dieser Polschuhe kann dabei auch eine der oben genannten Vertiefungen oder Bohrungen aufweisen.

Ferner ist vorteilhaft, wenn die einander zugewandten Polflächen zwar eben ausgebildet sind, aber nicht wie üblicherweise eine gleichförmige Materialzusammensetzung aufweisen, sondern im mittleren Bereich Magnetmaterial mit anderen Materialparametern verwendet wird. Der Übergang zwischen den unterschiedlichen Materialen kann stufig sein, beispielsweise durch Einsetzen von höher- oder niederremanenten Material in vorgesehene Aussparungen, oder stufenlos sein, beispielsweise durch Verwendung von inhomogenen Materialgemischen. Vorzugsweise ist das Magnetmaterial im mittleren Bereich niederremanent und im äußeren Bereich höherremanent.

Ferner ist denkbar, dass die Magnetisierung der beiden Magnete ungleichmäßig ist, nämlich insbesondere im mittleren Beriech schwächer als im äußeren Bereich.

Vorteilhafterweise ist das Magnetfeld in den äußeren Bereichen der Polflächen nach innen zur Mittelachse hin geneigt, wobei die Polflächen eben ausgebildet sind.

Zur Verringerung des Streufeldes und zur Abschirmung externer Störfelder ist es vorteilhaft, wenn die Magnete von einem Flussleitstück eingefasst sind, das insbesondere aus einem weichmagnetischen Material ist.

Die Erfindung umfasst ferner eine Ausgestaltung, die mehrere, insbesondere eine gerade Anzahl von Magneten, und vorzugsweise vier Magnete, vorsieht. Dabei sind jeweils zwei Magnete sich gegenüberliegend angeordnet, wobei diese sich gegenüberliegenden Magnete einander zugewandte Polflächen aufweisen. Die einander zugewandten Polflächen können hierbei jeweils weitgehend parallel zueinander angeordnet sein. Durch das Vorsehen von nicht nur zwei Magneten, sondern von weiteren Magneten, kann ebenfalls ein homogenes Magnetfeld im Bereich des Sensorelements geschaffen werden.

Vorteilhafterweise erstreckt sich der Bereich, in dem ein homogenes bzw. gleichmäßiges Magnetfeld vorliegt, über einen Abschnitt von wenigstens +/- 0,5 mm, und insbesondere von wenigstens +/- 1 mm, ausgehend von der Sollposition des Sensorelements in Richtung der Polflächen der Magnete.

Hierdurch wird gewährleistet, dass bei einer Außermittigkeit des Sensorelements um die genannten Beträge das Messergebnis nicht verfälscht wird. Insbesondere bei sich auf die Drehachse des Magnetsystems während der Messung verändernden Kräften, die zu einer geringen Auslenkung der Magnet'e gegenüber dem Sensorelement führen können, wird erfindungsgemäß das Messergebnis nicht verfälscht. Der Bereich, in dem das Magnetfeld bzw. die magnetische Flussdichte homogen ist, ist so auszulegen, dass die Auslenkung des Magnetsystems bzw. der Magnete innerhalb dieses Bereichs liegen.

Weitere vorteilhafte Einzelheiten und Ausgestaltungen der Erfindung sind der folgenden Beschreibung zu entnehmen, in der die in der Zeichnung dargestellten Ausführungsbeispiele näher beschrieben und erläutert sind.

In der Zeichnung zeigen:
- Fig. 1:: einen aufgeschnittenen erfindungsgemäßen Winkelmesssensor in perspektivischer Ansicht;
- Fig. 2:: ein Magnetsystem nach dem bekannten Stand der Technik;
- Fig. 3, 4, 5, 6, 7, 8, 9, 10:: verschiedene Magnetsysteme für erfindungsgemäße Winkelmesssensoren;
- Fig. 11:: ein Messdiagramm eines Winkelmesssensors nach dem bekannten Stand der Technik; und
- Fig. 12:: ein Messdiagramm eines Winkelmesssensors gemäß der Erfindung.

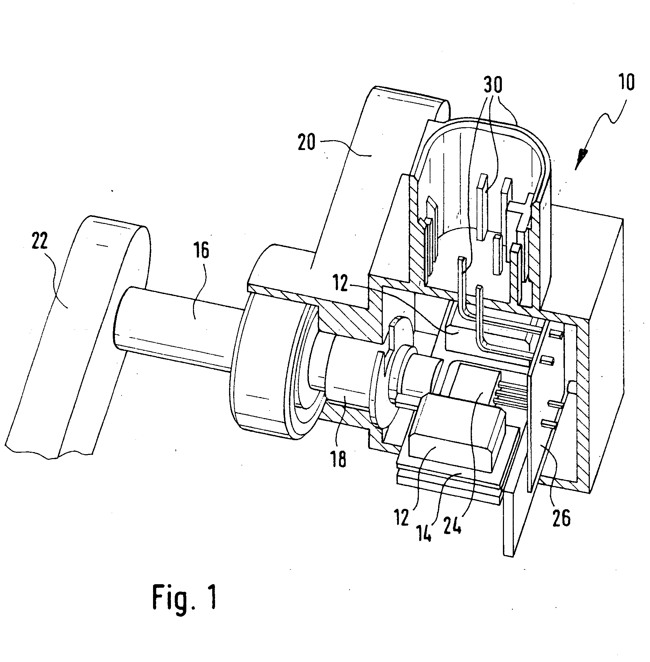

Der in der Fig. 1 dargestellte Winkelmesssensor 10 umfasst ein Magnetsystem, das aus zwei gegenüberliegenden Magneten 12 besteht. Die Magnete 12 sind auf einem U-förmigen Trägerelement 14 angeordnet, das im Bereich zwischen den Magneten mit einer Welle 16 drehfest gekoppelt ist. Die Welle 16, die sich über ein Lager 18 an einem Gehäuse 20 abstützt, weist an ihrem freien Ende einen Hebelarm 22 auf. Bei Bewegung des Hebelarms 22 wird folglich die Welle 16 mit den beiden Magneten 12 in eine Drehbewegung versetzt.

Zwischen den beiden Magneten 12 ist ein Sensorelement 24 in Form eines Hall-IC's angeordnet. Der Hall IC 24 ist auf einer Leiterplatine 26 angeordnet, die über elektrische Leiter 28 mit einem an das Gehäuse 20 angeformten Steckeranschluss 30 elektrisch verbunden ist.

Zwischen den beiden Magneten 12 bzw. zwischen den Polflächen der beiden Magnete 12 ist ein Magnetfeld vorhanden. Bei Drehung der Magnete 12 um das gehäuseseitig fest angeordnete Sensorelement 24 ändert das Magnetfeld seine Lage gegenüber dem Sensorelement 24. Aufgrund der Änderung des Magnetfelds kann auf die Winkellage der Welle 16 rückgeschlossen werden.

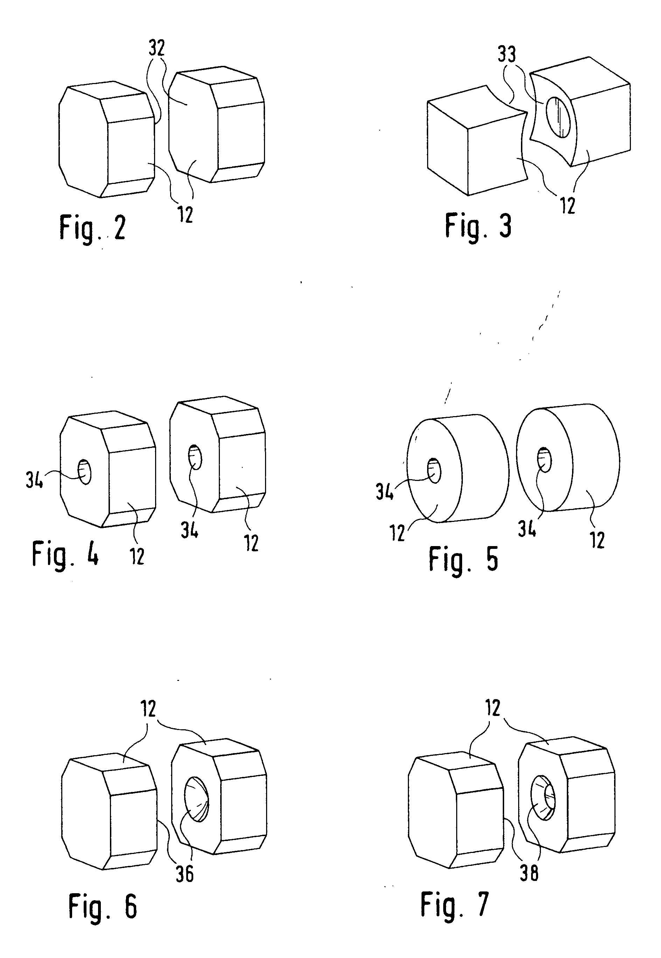

Bekannte Winkelmesssensoren sehen ein Magnetsystem vor, wie es in Fig. 2 dargestellt ist. Die einander gegenüberliegenden Polflächen 32 der Magnete 12 sind parallel zueinander angeordnet und eben ausgebildet. Ein derartiges Magnetsystem führt zu einem sehr inhomogenen bzw. ungleichmäßigen Magnetfeld mit sich ändernder Flussdichte bei sich ändernder Position zwischen den beiden Magneten 12.

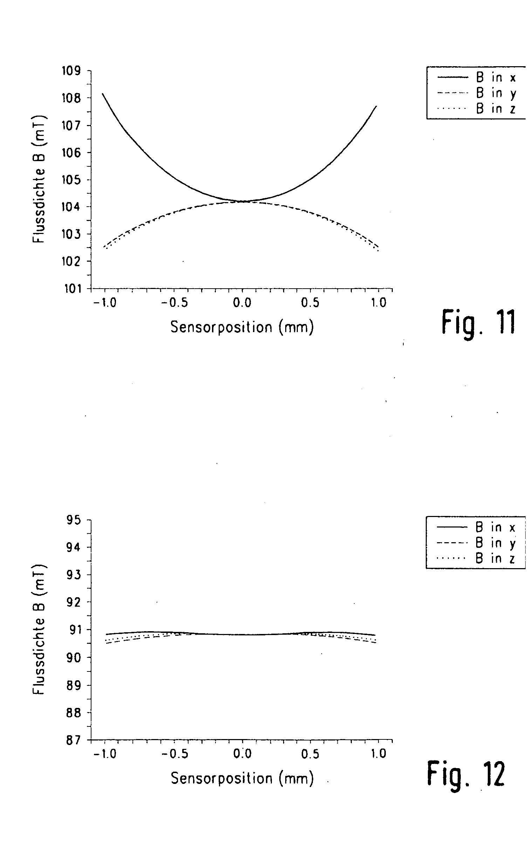

Dies zeigt Fig. 11. Die magnetische Flussdichte B weist ihr Minimum in der vorgegebenen Sollposition des Sensorelements (Position 0,0 mm) auf. Befindet sich das Sensorelement 24 allerdings nicht exakt in der vorgegebenen Sollposition, sondern liegt eine Verschiebung in Richtung der x-Richtung hin zu den Polflächen oder in Richtung der y- bzw. z-Richtungen quer zu den Polflächen vor, so ändert sich die Flussdichte erheblich. Aufgrund einer derartigen sich ändernden Flussdichte wird das Messergebnis bei außermittig liegendem Sensorelement 24 verfälscht. Insbesondere dann, wenn Lasten auf den Hebelarm 22 bzw. die Welle 16 wirken, kann es zu einer Verschiebung der Lage der Magnete 12 gegenüber dem Sensorelement 24 kommen. In diesem Fall liegt dann das Sensorelement 24 nicht mehr exakt mittig in der vorgegebenen Sollposition zwischen den beiden Magneten 12. Es kommt zu falschen Messergebnissen.

Erfindungsgemäß sind die Magnete 12 derart angeordnet und/oder sind die einander zugewandten Polflächen der Magnete so ausgebildet, dass das Magnetfeld bzw. die magnetische Flussdichte zwischen den Magneten in einem großen Bereich homogen ist, wie es in Fig. 12 dargestellt ist. Vorteilhafterweise wird eine Homogenität in sämtlichen Richtungen, gemäß Fig. 12 in x-, y- und z-Richtung, erreicht. Ein Auslenken der Magnete 12 von ihrer vorgesehenen Kreisbahn bzw. ein Abweichen der Sensorposition um einen Abschnitt von wenigstens +/- 0,5 bzw. +/- 1 mm führt zu keiner Verfälschung des Messergebnisses. Die Flussdichte B ist in den genannten Bereichen weitgehend konstant.

Zur Erzielung eines solchen homogenen Magnetfeldes bzw. einer solchen konstanten Flussdichte können die Magnetsysteme vorteilhafterweise gemäß den Fig. 3 bis 10 ausgebildet sein, wobei die Magnetisierung entlang der Längsachse der Magneten 12 verläuft.

Gemäß der Ausgestaltung nach Fig. 3 sind die einander zugeordneten Polflächen der Magnete uneben und weisen jeweils eine kalottenartige Aushöhlung 33 auf. Der Querschnitt der Magnete ist rechteckig bzw. quadratisch.

Das Magnetsystem gemäß Fig. 4 weist Durchgangsbohrungen 34 entlang der Längsachse der Magnete 12 auf. Der Querschnitt der Magnete ist achteckig, wobei eine rechteckige Grundform vorliegt, die entsprechend abgephaste Längskanten aufweist.

Das Magnetsystem gemäß Fig. 5 weist einen kreisrunden Querschnitt auf, wobei auch hier entlang der Längsachsen der Magnete 12 Durchgangsbohrungen 34 vorgesehen sind.

Der Querschnitt des Magnetsystems gemäß Fig. 6 entspricht dem Querschnitt der Magnete 12 gemäß Fig. 4. Allerdings weisen die einander zugewandten Polflächen der Magnete 12 kegelförmige Vertiefungen 36 auf.

Das Magnetsystem gemäß Fig. 7 entspricht im Wesentlichen dem Magnetsystem gemäß Fig. 6, wobei an den einander zugewandten Polflächen der Magnete 12 kegelstumpfartig ausgebildete Vertiefungen 38 vorgesehen sind.

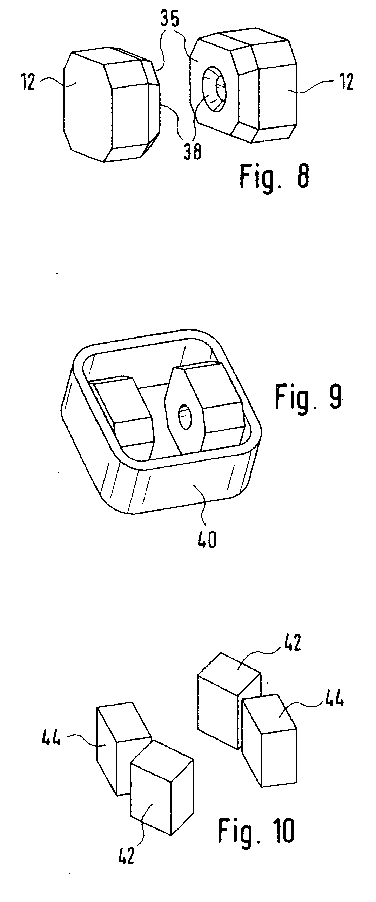

Die Magnete 12 gemäß Fig. 8 weisen einander zugewandte Polschuhe 35 aus weichmagnetischem Material auf. Das weichmagnetische Material sieht entlang der Längsachse der Magneten 12 eine kegelstumpfartige Vertiefung 38 vor. Die Polschuhe 35 weisen an ihren äußeren Kanten reliefartige Anfasungen auf. Durch derartige Ausgestaltung der Polschuhe 35 kann ebenfalls das Magnetfeld zwischen den Magneten 12 homogenisiert werden.

Gemäß Fig. 9 sind die beiden Magnete 12 von einem Flussleitstück 40 eingefasst, das das Streufeld verringert und externe Störfelder abschirmt. Auch hierdurch wird zu einer Homogenisierung des Magnetfelds beigetragen.

Fig. 10 sieht eine weitere Ausführungsform des Magnetsystems vor, wobei hier insgesamt vier Magnete 42 und 44 vorgesehen sind. Die Magnete 42 liegen sich jeweils gegenüber. Entsprechend liegen sich die Magnete 44 gegenüber. Dadurch, dass mehrere Magnete vorgesehen sind, kann ein homogenes Magnetfeld realisiert werden. Die Längsachsen der Magnete 42, die vorteilhafterweise auf einer Linie liegen können, schneiden die Längsachsen der Magnete 44, die ebenfalls auf einer Linie liegen können, unter einem Winkel, der von 90° verschieden ist.

Weitere Ausgestaltungen der einander zugewandten Polflächen bzw. weitere Magnete können vorgesehen sein, um in einem möglichst großen Bereich zwischen den Magneten, in dem das Sensorelement 24 angeordnet ist, ein homogenes Magnetfeld bzw. ein Magnetfeld mit einer konstanten Flussdichte zu erreichen. Die Erfindung ist nicht auf die dargestellten Ausführungsformen der Magnete beschränkt.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Winkelmesssensor (10) mit einem wenigstens zwei Magnete (12) umfassenden, um eine Achse drehbar angeordneten Magnetsystem und mit einem zwischen den Magneten (12) angeordneten, der Drehbewegung der Magnete (12) nicht folgenden Sensorelement (24), **dadurch gekennzeichnet, dass** die Magnete (12) derart angeordnet sind und/oder dass die einander zugewandten Polflächen (32) der Magnete (12) derart ausgebildet sind, dass das Magnetfeld bzw. die magnetische Flussdichte zwischen den Magneten (12) in einem großen Bereich homogen ist.

2. Winkelmesssensor (10) nach Anspruch 1, **dadurch gekennzeichnet, dass** die einander zugewandten Polflächen (32) der Magnete (12) uneben sind.

3. Winkelmesssensor (10) nach Anspruch 1 oder 2, **dadurch gekennzeichnet, dass** die einander zugewandten Polflächen (32) der Magnete (12) jeweils eine Aushöhlung, insbesondere eine kalottenartige Aushöhlung (33), aufweisen.

4. Winkelmesssensor (10) nach Anspruch 1, 2 oder 3, **dadurch gekennzeichnet, dass** die einander zugewandten Polflächen (32) der Magnete (12) jeweils eine Bohrung (34), insbesondere eine Sack- oder Durchgangsbohrung, aufweisen.

5. Winkelmesssensor (10) nach einem der vorhergehenden Ansprüche, **dadurch gekennzeichnet, dass** die einander zugewandten Polflächen (32) der Magnete (12) kegeloder stumpfkegelartige Vertiefungen (36, 38) aufweisen.

6. Winkelmesssensor (10) nach einem der vorhergehenden Ansprüche, **dadurch gekennzeichnet, dass** die einander zugewandten Polflächen (32) der Magnete (12) reliefartig geformte Oberflächen, insbesondere reliefartig ausgebildete Kanten, aufweisen.

7. Winkelmesssensor (10) nach einem der vorhergehenden Ansprüche, **dadurch gekennzeichnet, dass** die einander zugewandten Polflächen (32) der Magnete (12) freiformartig ausgebildet sind.

8. Winkelmesssensor (10) nach einem der vorhergehenden Ansprüche, **dadurch gekennzeichnet, dass** die Magnete (12) einen rechteckigen, mehreckigen, insbesondere achteckigen, oder runden Querschnitt aufweisen.

9. Winkelmesssensor (10) nach einem der vorhergehenden Ansprüche, **dadurch gekennzeichnet, dass** die einander zugewandten Polflächen (32) oder Polschuhe (35) der Magnete (12) aus weichmagnetischen Material sind.

10. Winkelmesssensor (10) nach einem der vorhergehenden Ansprüche, **dadurch gekennzeichnet, dass** die Magnetisierung der Magnete (12) inhomogen ist und insbesondere im mittleren Bereich der Magnete (12) schwächer ist.

11. Winkelmesssensor (10) nach einem der vorhergehenden Ansprüche, **dadurch gekennzeichnet, dass** die Magnete (12) aus Magnetmaterial mit unterschiedlichen Materialparametern bestehen, wobei insbesondere im äußeren Bereich der Polflächen (32) bzw. der Magnete (12) höherremanentes Material und im inneren Bereich niederremanentes Material verwendet wird.

12. Winkelmesssensor (10) nach Anspruch 10, **dadurch gekennzeichnet, dass** der Übergang zwischen den unterschiedlichen Magnetmaterialien stufig oder stufenlos ist.

13. Winkelmesssensor (10) nach einem der vorhergehenden Ansprüche, **dadurch gekennzeichnet, dass** die Magnetisierung in den äußeren Bereiche der Polflächen (32) bzw. der Magnete (12) nach innen zur Mittelachse hin geneigt ist.

14. Winkelmesssensor (10) nach einem der vorhergehenden Ansprüche, **dadurch gekennzeichnet, dass** die Magnete (12) von einem Flussleitstück (40) eingefasst sind, das insbesondere aus einem weichmagnetischen Material ist.

15. Winkelmesssensor (10) nach einem der vorhergehenden Ansprüche, **dadurch gekennzeichnet, dass** mehrere, insbesondere eine gerade Anzahl von Magneten (42, 44), vorzugsweise vier Magnete, vorgesehen sind.

16. Winkelmesssensor (10) nach Anspruch 15, **dadurch gekennzeichnet, dass** jeweils zwei Magnete (42, 44) sich gegenüberliegen und einander zugewandte Polflächen (32) aufweisen.

17. Winkelmesssensor (10) nach Anspruch 15 oder 16, **dadurch gekennzeichnet, dass** die einander zugewandten Polflächen (32) jeweils weitgehend parallel zueinander angeordnet sind.

18. Winkelmesssensor (10) nach einem der vorhergehenden Ansprüche, **dadurch gekennzeichnet, dass** sich der Bereich des homogenen Magnetfelds über einen Abschnitt von wenigstens +/- 0,5 mm, und insbesondere von wenigstens +/- 1 mm, ausgehend von der Sollposition des Sensorelements in Richtung der Polflächen (32) der Magnete (12) (=x-Achse) und in den beiden dazu senkrechten Richtungen (y- und z-Achse) erstreckt.
